# EUROPEAN PATENT APPLICATION

(11) **EP 4 794 084 A1**
(43) Date of publication of application: **19.08.2026**
(21) Application number: 25867452.2
(22) Date of filing: 02.04.2025
(51) Int. Cl.: H01M 50/244, H01M 50/242, H01M 50/231

(54) **PROTECTIVE PLATE, BATTERY BOX, BATTERY MODULE, AND BATTERY PACK**

(30) Priority: 23.09.2024 CN 202422321813 U; 24.09.2024 CN 202422341284 U; 30.09.2024 CN 202422409811 U
(71) Applicant: Eve Energy Co., Ltd., Huizhou, Guangdong 516006 (CN)
(72) Inventor: ZHU, Qiang, Huizhou, Guangdong 516006 (CN)
(74) Representative: Zhu, Puxing
(86) International application number: PCT/CN2025/086945
(87) International publication number: WO 2026/060924

(57) **Abstract**

The present application provides a protective plate, a battery box, a battery module, and a battery pack. The protective plate includes a first protective layer, a reinforcement layer, a buffer layer, and a second protective layer stacked along a first direction. The reinforcement layer and the buffer layer are stacked between the first protective layer and the second protective layer. The buffer layer includes multiple first buffer grooves and multiple second buffer grooves, the multiple first buffer grooves and the second buffer grooves are arranged on two opposite sides of the buffer layer, and the multiple first buffer grooves and the multiple second buffer grooves are distributed in a staggered manner.

## Description

The present application claims priorities to Chinese Patent Applications No. 202422321813.2, filed to China National Intellectual Property Administration on September 23, 2024, No. 202422341284.2, filed to China National Intellectual Property Administration on September 24, 2024, and No. 202422409811.9, filed to China National Intellectual Property Administration on September 30, 2024, the contents of which are incorporated herein by reference in their entireties.

### TECHNICAL FIELD

The present application relates to the field of battery structure technology, and in particular to a protective plate, a battery box, a battery module, and a battery pack.

### BACKGROUND

In the related technologies, a protective plate is arranged at a bottom of a battery box of a battery pack to protect a battery module or other components in the battery box, reduce the risk of damage to the battery module or other components in the battery box caused by an impact on the bottom of the battery box, and improve the safety of the battery pack.

### SUMMARY

However, the requirements for the safety of battery packs become increasingly high, the impact resistance of the protective plates in related technologies is weak and cannot meet the requirements.

The present application provides a protective plate, including a first protective layer, a reinforcement layer, a buffer layer, and a second protective layer stacked along a fourth direction. The reinforcement layer and the buffer layer are stacked between the first protective layer and the second protective layer.

The buffer layer includes multiple first buffer grooves and multiple second buffer grooves, the multiple first buffer grooves and the second buffer grooves are distributed on two opposite sides of the buffer layer, and the multiple first buffer grooves and the multiple second buffer grooves are distributed in a staggered manner.

The present application further provides a battery box, including:
a box body including an accommodating cavity configured to accommodate a battery module and a foam adhesive, where a mounting opening in communication with the accommodating cavity is formed at a side of the box body; and
a box cover assembly including a cover plate and a separation layer, where the cover plate is connected to the box body and covers the mounting opening, the separation layer is arranged on a plate face of the cover plate facing the accommodating cavity, and the separation layer is configured to separate at least a portion of the plate face from the foam adhesive within the accommodating cavity.

The present application further provides a battery module, including:
a battery assembly including at least one battery, where the battery includes multiple battery cells arranged along a fourth direction, each of the battery cells extends along a fifth direction, and the fourth direction forms an included angle with the fifth direction; and
a support assembly including two brackets arranged opposite to each other, where two ends of each of the battery cells are supported by the two brackets.

First fixing holes are formed at two ends of at least one of the brackets along the fourth direction, fixing sleeves are embedded in the first fixing holes, and the fixing sleeves are configured to be sleeved on fasteners and fixedly connected to the fasteners.

The present application further provides a battery pack, including:
a battery box including an accommodating cavity; and
a battery module, where the battery module is the battery module as described above, and the battery module is mounted in the accommodating cavity.

### BENEFICIAL EFFECTS

In the protective plate provided by the present application, multiple first buffer grooves and multiple second buffer grooves are arranged on two sides of the buffer layer, and the multiple first buffer grooves and the multiple second buffer grooves are distributed in a staggered manner, so that not only the stiffness of the buffer layer is increased, but also the bottoms of the first buffer grooves and the second buffer grooves are elastically deformed significantly when impacted by external forces, and are not easily damaged. Furthermore, the bottoms of the first buffer grooves and the second buffer grooves transmit an impact force to walls of the first buffer grooves and the second buffer grooves, and the impact force is absorbed through the walls of the first buffer grooves and the second buffer grooves, so that the impact resistance of the buffer layer is improved, and an effective buffering is provided by the protective plate when subjected to a significant impact force.

In the battery box provided in the present application, a separation layer is arranged on a plate face, facing the accommodating cavity of the box body, of the box cover to separate at least a portion of the plate face from the foam adhesive in the accommodating cavity, so that a bonding strength between the cover plate and the foam adhesive is reduced. When the cover plate is disassembled from the box body, the separation layer is retained on the foam adhesive, or the separation layer is separated from the foam adhesive, or the separation layer is torn off, with a portion of the separation layer remaining on the foam adhesive and another portion of the separation layer remaining on the plate face of the cover plate, so as to facilitate the disassembly of the cover plate. In addition, the foam adhesive and other parts are not easily damaged during the disassembly of the cover plate, which is beneficial to reducing the maintenance cost of the battery pack.

In the battery module provided in the present application, first fixing holes are formed at two ends of at least one of the brackets along the fourth direction, and fixing sleeves are embedded in the first fixing holes. When the battery module is connected to the battery box, fasteners are inserted into the fixing sleeves, so that the fixing sleeves are sleeved on the fasteners and fixedly connected to the fasteners. The fasteners are connected to the battery box, so that the brackets are quickly fixed to the battery box, and it is convenient to operate. Meanwhile, the situation where the fasteners are directly connected to the brackets, causing excessively large fastening force applied to the brackets by the fasteners, resulting in deformation of the brackets or even failure of the fasteners to fasten the brackets, is avoided, which is conducive to improving the mounting stability of the battery module.

### BRIEF DESCRIPTION OF THE DRAWINGS

FIG. 1 is a schematic diagram of a structure of a protective plate provided in an embodiment of the present application;
FIG. 2 is a cross-sectional view taken along an A-A direction in FIG. 1;
FIG. 3 is an enlarged view of a part A in FIG. 2;
FIG. 4 is a view from another perspective of a structure of a protective plate provided in an embodiment of the present application;
FIG. 5 is a cross-sectional view taken along a B-B direction in FIG.4;
FIG. 6 is an enlarged view of a part B in FIG. 5;
FIG. 7 is a three-dimensional schematic diagram of a structure of a battery pack provided in an embodiment of the present application;
FIG. 8 is an exploded view of a structure of a battery pack provided in an embodiment of the present application;
FIG. 9 is a cross-sectional view taken along a C-C direction in FIG. 7;
FIG. 10 is an enlarged view of a part C in FIG. 9;
FIG. 11 is a schematic diagram of a structure of a box cover assembly provided in an embodiment of the present application;
FIG. 12 is an exploded view of a structure of a box cover assembly provided in an embodiment of the present application;
FIG. 13 is a schematic diagram of a structure of a battery module provided in an embodiment of the present application;
FIG. 14 is an exploded view of a structure of a battery module provided in an embodiment of the present application;
FIG. 15 is a view from another perspective of a structure of a battery module provided in an embodiment of the present application;
FIG. 16 is a schematic diagram of a structure of a bracket provided in an embodiment of the present application; and
FIG. 17 is an enlarged view of a part D in FIG. 16.

### Reference numerals in the accompany drawings:

1000: protective plate; 1001 second fixing hole; 1100: first protective layer; 1200: reinforcement layer; 1300: buffer layer; 131: first buffer groove; 132: second buffer groove; 133: connecting portion; 1400: second protective layer; 141: buffer protrusion; 142: second accommodating groove; 1500: buffer group; 151: buffer member; P: first direction; Q: second direction; O: third direction;
1: battery pack; 110: battery box; 1110: box body; 1111a: accommodating cavity; 1112a: mounting opening; 1113: bottom plate; 1114: side plate; 1115: connecting flange; 112: foam adhesive; 113: box cover assembly; 1131: cover plate; 1132: plate face; 1133: sealing area; 1134: separation area; 1135: separation layer; 1136: sealing section; 114: sealing member; 1141: sealing portion;
10: battery module; 11: battery assembly; 111: battery; 1111: battery cell; 1112: electrode; 120: support assembly; 121: bracket; 1210: connecting hole; 1211: positioning groove; 1212: avoidance hole; 1213: adhesive containing groove; 1214: connecting adhesive; 1215: fixing portion; 1216: first fixing hole; 1217: adhesive groove; 1218: accommodating portion; 1219: first accommodating groove; 130: fixing sleeve; 140: adhesive member; 150: conductive member; 160: busbar; 161: connecting member; 170: insulating sheet; X: fourth direction; Y: fifth direction; Z: height direction.

### DETAILED DESCRIPTION

In the description of the present application, unless otherwise clearly specified and limited, the terms "connected to", "connected", and "fixed" should be understood in a broad sense, for example, it can be referred to a fixed connection, a detachable connection, or an integral connection; it can be referred to a mechanical connection or an electrical connection; it can be referred to a direct connection or an indirect connection through an intermediate medium; and it can be referred to an internal communication between two elements or an interaction relationship between two elements. For ordinary technicians in this field, the specific meanings of the above terms in the present application can be understood according to the specific circumstances.

In the present application, unless otherwise clearly specified and limited, the description that a first feature is "on" or "under" a second feature may include the case where the first and second features are in direct contact, or may include the case where the first and second features are not in direct contact but through another feature between them. Moreover, the description that a first feature is "on", "above" or "over" a second feature includes the case where the first feature is directly above and obliquely above the second feature, and the horizontal height of the first feature is higher than that of the second feature. the description that a first feature is "under", "below" or "beneath" a second feature includes the case where the first feature is directly below and obliquely below the second feature, and the horizontal height of the first feature is lower than that of the second feature.

In the description of this embodiment, the terms "upper", "lower", "left", "right", "front", "rear" and other directional or positional relationships are based on the directional or positional relationships shown in the accompanying drawings, and are for the convenience of description and simplification of operation, rather than indicating or implying that the referred device or element must have a specific direction, be constructed and operated in a specific direction, and therefore cannot be understood as limiting the present application. In addition, the terms "first" and "second" are used for distinction in the description and have no special meanings.

Embodiments of the present application provide a protective plate, a battery box, a battery module, and a battery pack, which are described in detail as follows.

First, embodiments of the present application provide a protective plate.

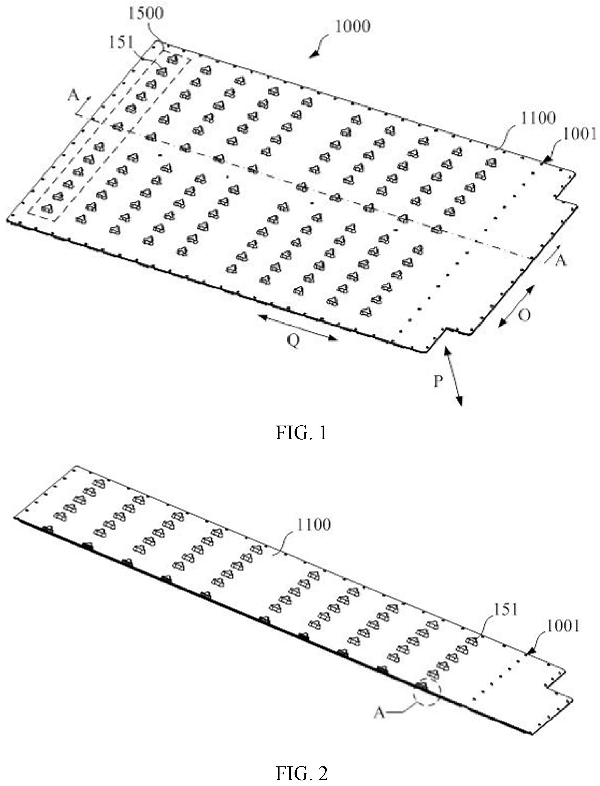

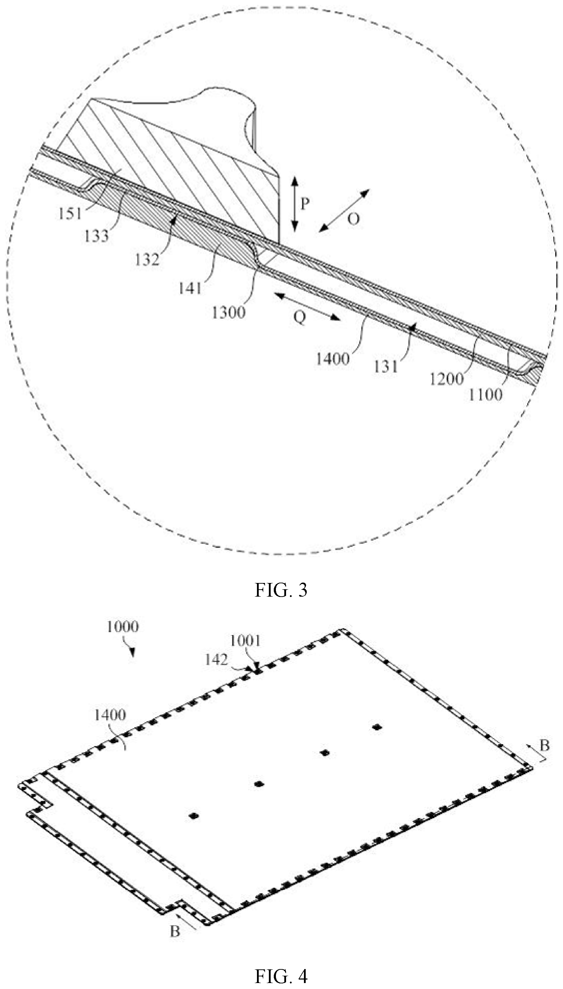

FIG. 1 is a schematic diagram of a structure of a protective plate provided in an embodiment of the present application. FIG. 2 is a cross-sectional view taken along an A-A direction in FIG. 1. FIG. 3 is an enlarged view of a part A in FIG. 2. As shown in FIG. 1 to FIG. 3, the protective plate 1000 includes a first protective layer 1100, a reinforcement layer 1200, a buffer layer 1300, and a second protective layer 1400 stacked along a first direction P. The reinforcement layer 1200 and the buffer layer 1300 are stacked between the first protective layer 1100 and the second protective layer 1400.

The buffer layer 1300 includes multiple first buffer grooves 131 and multiple second buffer grooves 132. The multiple first buffer grooves 131 and the multiple second buffer grooves 132 are distributed on two opposite sides of the buffer layer 1300, and the multiple first buffer grooves 131 and the multiple second buffer grooves 132 are distributed in a staggered manner.

In the protective plate 1300 provided by the present application, multiple first buffer grooves 131 and multiple second buffer grooves 132 are arranged on two sides of the buffer layer, and the multiple first buffer grooves 131 and the multiple second buffer grooves 132 are distributed in a staggered manner, so that not only the stiffness of the buffer layer 1300 is increased, but also the bottoms of the first buffer grooves 131 and the second buffer grooves 132 are elastically deformed significantly when impacted by external forces, and are not easily damaged. Furthermore, an impact force is transmitted to walls of the first buffer grooves 131 and the second buffer grooves 132 through the bottoms of the first buffer grooves 131 and the second buffer grooves 132, and the impact force is absorbed by the walls of the first buffer grooves 131 and the second buffer grooves 132, so that the impact resistance of the buffer layer 1300 is improved, and an effective buffering is provided by the protective plate 1000 when subjected to a significant impact force.

It should be noted that in a case that the protective plate 1000 is used in a battery box (not shown in the drawings) of a battery pack (not shown in the drawings), a side, facing away from the reinforcing layer 1200, of the first protective layer 1100 of the protective plate 1000 faces a box body of the battery box, or a side, facing away from the reinforcing layer 1200, of the second protective layer 1400 of the protective plate 1000 faces a box body of the battery box.

In some embodiments, as shown in FIG. 3, the multiple first buffer grooves 131 and the multiple second buffer grooves 132 are alternately arranged along a second direction Q, and the second direction Q forms an included angle with the first direction P, so that the multiple first buffer grooves 131 and the multiple second buffer grooves 132 are distributed in a staggered manner. Furthermore, walls, configured to absorb an impact force, of the buffer layer 1300 are sequentially arranged along the second direction Q, which is conducive to enhancing an absorption effect on the impact force in each area of the buffer layer 1300.

The first buffer grooves 131 and the second buffer grooves 132 each extend along a third direction Q, and any two of the first direction P, and the second direction Q and the third direction Q form an included angle with each other, so that lengths of bottoms and walls of the first buffer grooves 131 and the second buffer grooves 132 are increased, thereby further improving the buffering effect of the buffer layer 1300.

In addition, in the second direction Q, a width of one of the first buffer grooves 131 is configured to be greater than a width of one of the second buffer grooves 132. As such, in a case that the protective plate 1000 is used in the battery box, a side, facing away from the reinforcing layer 1200, of the first protective layer 1100 of the protective plate 1000 faces the box body of the battery box, so that the width of the bottoms of the first buffer grooves 131 configured to bear the impact force is increased, and the buffering effect on the impact force is enhanced.

Specifically, the first buffer grooves 131 and the second buffer grooves 132 each pass through the buffer layer 1300 along the third direction Q. The first buffer grooves 131 and the second buffer grooves 132 are formed by performing processes, such as bending or stamping on plate-shaped components. The buffer layer 1300 is made of stainless steel or other metals to provide a high rigidity and a good buffering effect for the buffer layer 1300. Furthermore, the reinforcement layer 1200 is also made of stainless steel or other metals to provide a high rigidity and strength for the reinforcement layer 1200.

In other embodiments, the multiple first buffer grooves 131 are distributed in a matrix or other distribution patterns on a side of the buffer layer 1300, while the multiple second buffer grooves 132 are distributed in a matrix or other distribution patterns on another side of the buffer layer 1300, and the multiple first buffer grooves 131 and the multiple second buffer grooves 132 are distributed in a staggered manner. A cross-section of the first buffer grooves 131 and/or the second buffer grooves 132 in a direction perpendicular to the first direction P is polygonal, circular, or the like in shape.

In some embodiments, a thickness of the buffer layer 1300 is greater than or equal to 2 mm and less than or equal to 5 mm. That is, a maximum distance between a side face of a side, facing the reinforcement layer 1200, of the buffer layer 1300 and a side face of a side, facing the second protective layer 1400, of the buffer layer 1300 is greater than or equal to 2 mm and less than or equal to 5 mm, so as to provide a good buffering effect of the buffer layer 1300 without making an overall thickness of the protective plate 1000 excessively large. A thickness of the buffer layer 1300 can be 2.5 mm, 3 mm, 3.5 mm, 4 mm, 4.5 mm, etc., which depends on the impact force to be buffered and a required thickness of the protective plate 1000.

In some embodiments, a thickness of a wall of one of the first buffer grooves 131 is greater than or equal to 0.6 mm and less than or equal to 1 mm, so that the impact force is effectively absorbed through the walls of the first buffer grooves 131 without making the buffer layer 1300 excessively heavy. The thickness of the wall of one of the first buffer grooves 131 can be 0.65 mm, 0.7 mm, 0.8 mm, 0.9 mm, etc., which depends on the impact force to be buffered and a required weight of the protective plate 1000.

Furthermore, a thickness of the wall of one of the second buffer grooves 132 is greater than or equal to 0.6 mm and less than or equal to 1 mm, so that the impact force is effectively absorbed through the walls of the second buffer grooves 132 without making the buffer layer 1300 excessively heavy. The thickness of the wall of one of the second buffer grooves 132 can be 0.65 mm, 0.7 mm, 0.8 mm, 0.9 mm, etc., which depends on the impact force to be buffered and a required weight of the protective plate 1000.

It should be noted that the thickness of the buffer layer 1300, the thickness of the wall of the first buffer grooves 131 and the thickness of the wall of the second buffer grooves 132 all meet the above-mentioned size requirements, or only one or two of them meet the above-mentioned size requirements, as long as a good buffering effect on the impact force is provided.

In addition, when the first buffer grooves 131 and the second buffer grooves 132 are separated by a single side wall, the first buffer grooves 131 and the second buffer grooves 132 share a portion of the wall. The thickness of the wall of one of the first buffer grooves 131 is the same as or different from the thickness of the wall of one of the second buffer grooves 132.

In some embodiments, as shown in FIG. 3, the buffer layer 1300 is located between the reinforcement layer 1200 and the second protective layer 1400, and the second buffer grooves 132 are located on a side, facing the second protective layer 1400, of the buffer layer 1300. In a case that the protective plate 1000 is used in a battery box, a side, facing away from the reinforcement layer 1200, of the first protective layer 1100 of the protective plate 1000 faces the box body of the battery box, while a side, facing away from the buffer layer 1300, of the second protective layer 1400 is configured to bear the impact force and transmit the impact force to the buffer layer 1300, so that the impact force is effectively buffered through the buffer layer 1300.

A buffer protrusion 141 is further arranged on a side, facing the buffer layer 1300, of the second protective layer 1400, and the buffer protrusion 141 fills at least a part of the second buffer grooves 132. By arranging the buffer protrusion 141 on the second protective layer 1400 and filling the second buffer groove 132, in a case that a significant impact force is applied to a portion, corresponding to the second buffer groove 132, of the second protective layer 1400, the impact force is promptly transmitted to the buffer layer 1300 through the buffer protrusion 141, so that damage to the portion, corresponding to the second buffer groove 132, of the second protective layer 1400 caused by the significant impact force is avoided.

Specifically, multiple buffer protrusions 141 are arranged on the side, facing the buffer layer 1300, of the second protective layer 1400. The multiple buffer protrusions 141 are sequentially arranged along the second direction Q, and each of the buffer protrusions 141 extends along the third direction Q. Each of the buffer protrusions 141 fills one of the second buffer grooves 132.

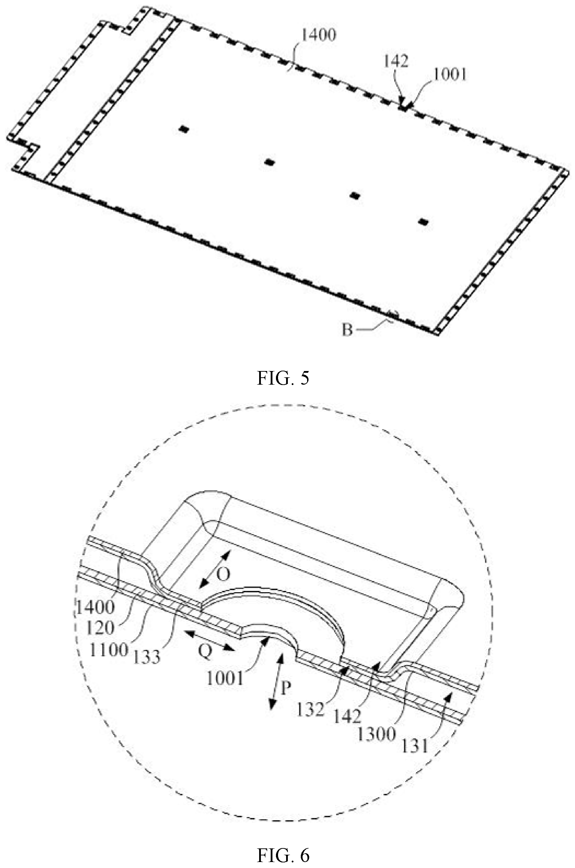

As shown in FIG. 4 to FIG. 6, the protective plate 1000 further includes second fixing holes 1001. The second fixing holes 1001 pass through the first protective layer 1100, the reinforcement layer 1200, connecting portions 133 of the buffer layer 1300, and the second protective layer 1400 along the first direction P. As such, fasteners pass through the second fixing holes 1001 to be fixedly connected to the box body.

In some embodiments, the buffer layer 1300 includes connecting portions 133 located at the bottoms of the second buffer grooves 132, and the second fixing holes 1001 pass through the connecting portions 133 of the buffer layer 1300. Since the connecting portions 133 are abutted against the reinforcement layer 1200, a risk of deformation of the buffer layer 1300 caused by excessive fastening force applied by the fasteners to the buffer layer 1300 is reduced.

Second accommodating grooves 142 are formed on a side, facing away from the buffer layer 1300, of the second protective layer 1400, and openings of the second fixing holes 1001 are formed at bottoms of the second accommodating grooves 142. Thus, when the fasteners (not shown in the drawings) pass through the second fixing holes 1001 to be connected to the box body, portions of the fasteners are accommodated within the second accommodating grooves 142, so that a height of the fasteners protruding from the side, facing away from the buffer layer 1300, of the second protective layer 1400 is reduced. The arrangement of the fasteners not protruding from the side, facing away from the buffer layer 1300, of the second protective layer 1400 is conducive to reducing the risk of the fastener being impacted by external forces.

In some embodiments, a thickness of the first protective layer 1100 is greater than or equal to 0.6 mm and less than or equal to 1 mm, so as to provide a high strength and a good protective effect for the first protective layer 1100 without making the overall thickness of the protective plate 1000 excessively large. The thickness of the first protective layer 1100 can be 0.65 mm, 0.7 mm, 0.8 mm, 0.9 mm, etc., which depends on parameters such as material and a required strength of the first protective layer 1100.

Additionally, the first protective layer 1100 is made of insulating materials such as resin and/or fiberglass, so as to provide an excellent corrosion resistance, insulation, and a high strength for the first protective layer 1100. In addition, it also allows the first protective layer 1100 to be combined well with the reinforcement layer 1200. Specifically, the first protective layer 1100 can be attached to a surface, facing away from the buffer layer 1300, of the reinforcement layer 1200 through processes such as thermoplastic molding.

In some embodiments, a thickness of the second protective layer 1400 is greater than or equal to 0.6 mm and less than or equal to 1 mm, so as to provide a high strength and a good protective effect for the second protective layer 1400 without making the overall thickness of the protective plate 1000 excessively large. The thickness of the second protective layer 1400 can be 0.65 mm, 0.7 mm, 0.8 mm, 0.9 mm, etc., which depends on parameters such as material and a required strength of the second protective layer 1400.

Furthermore, the second protective layer 1400 is made of insulating materials such as resin and/or fiberglass, so as to provide an excellent corrosion resistance, insulation, and a high strength for the second protective layer 1400. In addition, it also allows the second protective layer 1400 to be combined well with the reinforcement layer 1200. Specifically, the second protective layer 1400 can be attached to a surface, facing away from the reinforcement layer 1200, of the buffer layer 1300 through processes such as thermoplastic molding.

In some embodiments, a thickness of the reinforcement layer 1200 is greater than or equal to 0.8 mm and less than or equal to 1.2 mm, so as to provide a high rigidity for the reinforcement layer 1200 without making the overall thickness of the protective plate 1000 excessively large. The thickness of the reinforcement layer 1200 can be 0.85 mm, 0.8 mm, 0.9 mm, 1 mm, 1.5 mm, etc., which depends on parameters such as material and a required strength of the reinforcement layer 1200. Furthermore, the reinforcement layer 1200 is made of stainless steel or other metals, so as to provide a high rigidity and strength for the reinforcement layer 1200.

In some embodiments, as shown in FIG. 1 to FIG. 3, multiple buffer members 151 are arranged on the side, facing away from the reinforcement layer 1200, of the first protective layer 1100. Thus, the multiple buffer members 151 form a buffer between the first protective layer 1100 and the battery module or other components within the box body, so that the buffer layer 1300 is prevented from directly transmitting the impact force to the battery module or other components within the box body through the reinforcement layer 1200 and the first protective layer 1100, thereby preventing damage to the battery module or other components.

The buffer layer 1300 includes connecting portions 133 located at the bottoms of the second buffer grooves. The buffer members 151 are positioned corresponding to the connecting portions 133. It is understood that in a case that the second protective layer 1400 of the protective plate 1000 is impacted, the impact force will be transmitted to the connecting portions 133 through the walls of the first buffer grooves 131 and the second buffer grooves 132 of the buffer layer 1300. The buffer members 151 are positioned corresponding to the connecting portions 133, so that the impact force transmitted to the connecting portions 133 is effectively buffered, which is conducive to further improving an impact resistance effect of the protective plate 1000.

Specifically, the multiple buffer members 151 are divided into multiple buffer groups 1500, each of the buffer groups 1500 is arranged corresponding to a respective one of the connecting portions 133, and the multiple buffer members 151 in one of the buffer groups 1500 are arranged at intervals along an extension direction of the connecting portions 133, so that the buffering effect of the multiple buffer members 151 on the impact force at different positions of the protective plate 1000 is enhanced.

Embodiments of the present application further provide a battery box, and the battery box includes a protective plate. A specific structure of the protective plate refers to the above embodiments. Since the battery box adopts all the technical solutions of all the above embodiments, the battery box achieves at least all the beneficial effects brought by the technical solutions of the above embodiments, which are not repeated here.

The battery box (not shown in the drawings) includes a box body and the protective plate 1000, the box body includes an accommodating cavity, and the accommodating cavity is configured to accommodate a battery module. The protective plate 1000 is connected to the box body, and a structure of the protective plate 1000 refers to the above embodiments. A side, facing away from the reinforcing layer 1200, of the first protective layer 1100 of the protective plate 1000 faces the box body.

In the related technologies, when the battery module of the battery pack is mounted in the battery box, a foam adhesive is filled between the battery module and an inner wall of the battery box to effectively protect the battery module. However, the foam adhesive will be adhered to a box cover of the battery box, resulting in difficulty in disassembling the box cover of the battery box and affecting the maintenance of components inside the battery box.

To this end, embodiments of the present application further provide a battery box.

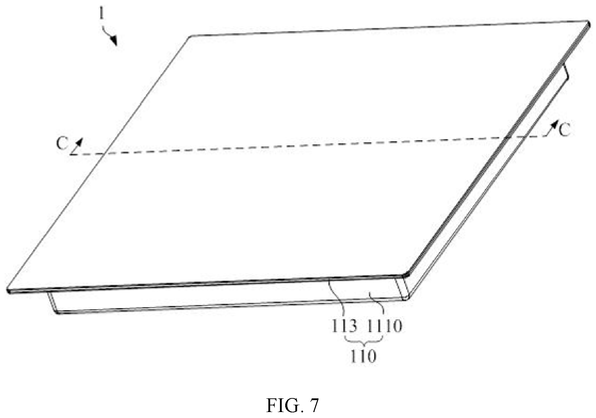

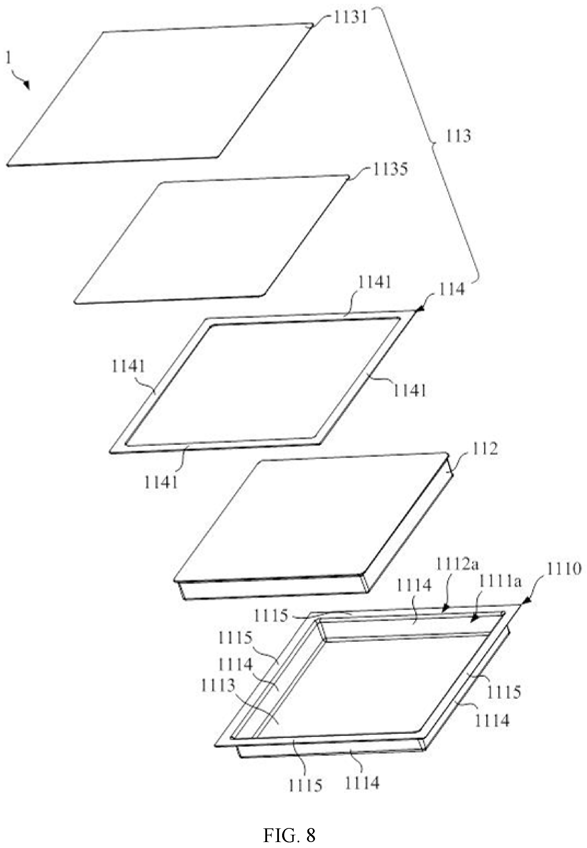

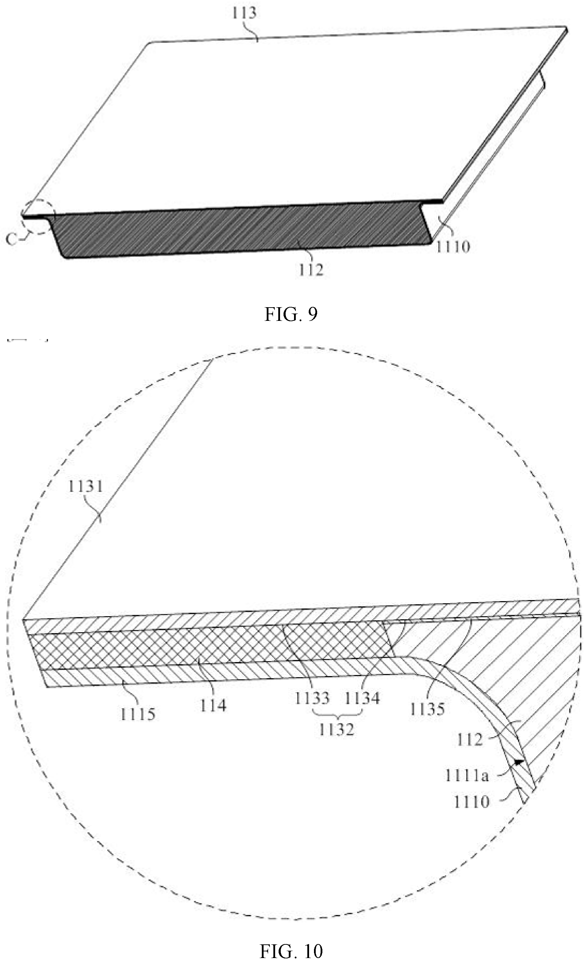

FIG. 7 is a three-dimensional schematic diagram of a structure of a battery pack provided in an embodiment of the present application. FIG. 8 is an exploded view of a structure of a battery pack provided in an embodiment of the present application. FIG. 9 is a cross-sectional view taken along a C-C direction in FIG. 7. FIG. 10 is an enlarged view of a part C in FIG. 9. As shown in FIG. 7 to FIG. 10, the battery pack 1 includes a battery box 110 and a battery module (not shown in the drawings). The battery box 110 includes a box body 1110 and a box cover assembly 113. The box body 1110 includes an accommodating cavity 1111a configured to accommodate the battery module and a foam adhesive 112. A mounting opening 1112a in communication with the accommodating cavity 1111a is formed on a side of the box body 1110. The mounting opening 1112a is configured to allow the battery module and other components of the battery pack 1 to be mounted in the accommodating cavity 1111a. The box cover assembly 113 includes a cover plate 1131, and the cover plate 1131 is connected to the box body 1110 and covers the mounting opening 1112a, so as to protect the battery module and other components within the box body 1110.

Continuing to refer to FIG. 8 to FIG. 10, the battery pack 1 further includes a foam adhesive 112, the foam adhesive 112 is filled in a space between the battery module and the battery box 110 to further enhance the protection effect on the battery module. Specifically, when the battery module and other components of the battery pack 1 are mounted in the accommodating cavity 1111a of the box body 1110, the foam adhesive 112 is sprayed into the accommodating cavity 1111a, and the cover plate 1131 is covered on the mounting opening 1112a of the box body 1110, so that the cover plate 1131 covers the mounting opening 1112a. The foam adhesive 112 is expanded and filled between the battery module and the cover plate 1131 and the box body 1110 of the battery box 110.

The battery module includes multiple battery cells, and the multiple battery cells are arranged in parallel in the accommodating cavity 1111a of the box body 1110. The foam adhesive 112 is filled among each of the battery cells, an inner peripheral face of the accommodating cavity 1111a of the box body 1110, and a plate face 1132, on a side facing the accommodating cavity 1111a, of the cover plate 1131.

In the related technologies, the foam adhesive filled among the battery module, the box cover and the box body of the battery box will be adhered to the box cover, resulting in difficulty in disassembling the box cover of the battery box. Once a battery distribution unit (BDU), a battery management system (BMS) and other devices in the battery box fail, the box cover cannot be opened to maintain these devices, and the only thing that can be done is to forcibly disassemble the box cover, which easily causes damage to other components of the battery pack. Alternatively, the battery pack is just replaced, which increases after-sales cost of the battery pack.

To alleviate the above problems, embodiments of the present application provide a battery box. As shown in FIG. 8 to FIG. 12, the battery box 110 includes a box cover assembly 113, and the box cover assembly 113 includes a cover plate 1131 and a separation layer 1135. The cover plate 1131 is connected to the box body 1110 and the cover plate 1131 covers the mounting opening 1112a of the box body 1110, so as to allow the accommodating cavity 1111a of the box body 1110 formed as a closed space. The separation layer 1135 is arranged on a plate face 1132, on a side facing the accommodating cavity 1111a, of the cover plate 1131. The separation layer 1135 is configured to separate at least a portion of the plate face 1132 from the foam adhesive 112 in the accommodating cavity 1111a.

In the battery box 110 provided in the embodiments of the present application, the separation layer 1135 is arranged on a side face 1114, facing the accommodating cavity 1110 of the box body 1110, of the box cover 1131 to separate at least a portion of the plate face 1132 from the foam adhesive 112 in the accommodating cavity 1110, so that a bonding strength between the cover plate 1131 and the foam adhesive 112 is reduced. When the cover plate 1131 is disassembled from the box body 1110, the separation layer 1135 is retained on the foam adhesive 112, or the separation layer 1135 is separated from the foam adhesive 112, or the separation layer 1135 is torn off, with a portion of the separation layer 1135 remaining on the foam adhesive 112 and another portion of the separation layer remaining on the plate face 1132 of the cover plate 1131, so as to facilitate the disassembly of the cover plate 1131. In addition, the foam adhesive 112 and other parts are not easily damaged during the disassembly of the cover plate 1131, which is beneficial to reducing the maintenance cost of the battery pack 1.

The separation layer 1135 is a tearable film. When the cover plate 1131 is disassembled from the box body 1110, the separation layer 1135 is easily torn off, so that a pulling force applied to the cover plate 1131 is reduced, and the cover plate is easily disassembled from the box body 1110.

In some embodiments, the separation layer 1135 is made of a material including one or more of polyethylene glycol terephthalate (PET), polyvinyl chloride (PVC), and thermoplastic polyurethane (TPU) to make the separation layer 1135 to be easily torn off. Furthermore, a bonding strength between the separation layer 1135 and the foam adhesive 112 is reduced. When the plate cover 1131 is disassembled from box body 1110, the separation layer 1135 is easily separated from the foam adhesive 112, thereby facilitating the disassembly of the plate cover 1131.

In some embodiments, the separation layer 1135 is bonded to the plate face 1132 of the cover plate 1131 to make a connection between the separation layer 1135 and the cover plate 1131 stable, so that the problem that when the cover plate 1131 is covered on the mounting opening 1112a of the box body 1110, the separation layer 1135 falls off from the plate face 1132 of the cover plate 1131, thereby causing part or all of the plate face 1132 of the cover plate 1131 to be directly bonded to the foam adhesive 112 during an expansion of the foam adhesive 112, is alleviated.

A bonding strength between the separation layer 1135 and the plate face 1132 of the cover plate 1131 is configured to be smaller than the bonding strength between the separation layer 1135 and the foam adhesive 112. Therefore, when cover plate 1131 is disassembled from the box body 1110, the separation layer 1135 is easily separated from the plate face 1132 of the cover plate 1131, which not only makes the disassembly of the cover plate 1131 easy and convenient, but also helps to keep the separation layer 1135 as a whole easily.

Alternatively, the bonding strength between the separation layer 1135 and the plate face 1132 is configured to be greater than the bonding strength between the separation layer 1135 and the foam adhesive 112. Therefore, when the cover plate 1131 is disassembled from the box body 1110, the separation layer 1135 is easily separated from the foam adhesive 112, which not only makes the disassembly of the cover plate 1131 easy and convenient, but also helps to keep the separation layer 1135 as a whole easily.

In other embodiments, the separation layer 1135 is formed by coating the plate face 1132, on a side facing the accommodating cavity 1111a of the box body 1110, of the cover plate 1131. Alternatively, the separation layer 1135 is attached to the plate face 1132, on a side facing the accommodating cavity 1111a of the box body 1110, of the cover plate 1131 through processes such as electrostatic adsorption or vacuum adsorption.

In some embodiments, a thickness of the separation layer 1135 is less than or equal to 0.5 mm, so that the problem that the separation layer 1135 is excessively thick, and is difficult to be torn off when the plate cover 1131 is disassembled from the box body 1110, thereby making it difficult to separate the plate cover 1131 from the foam adhesive 112, is avoided. The thickness of the separation layer 1135 can be 0.45 mm, 0.35 mm, 0.25 mm, etc., which depends on a material of the separation layer 1135.

Furthermore, the thickness of separation layer 1135 is greater than or equal to 0.2 mm to provide a certain strength, and reduce a risk of damage to the separation layer 1135 during the process of being mounted on the side plate 1114, on a side facing accommodating cavity 1111a, of cover plate 1131. The thickness of separation layer 1135 can be 0.3 mm, 0.4 mm, etc., which depends on the material of the separation layer 1135.

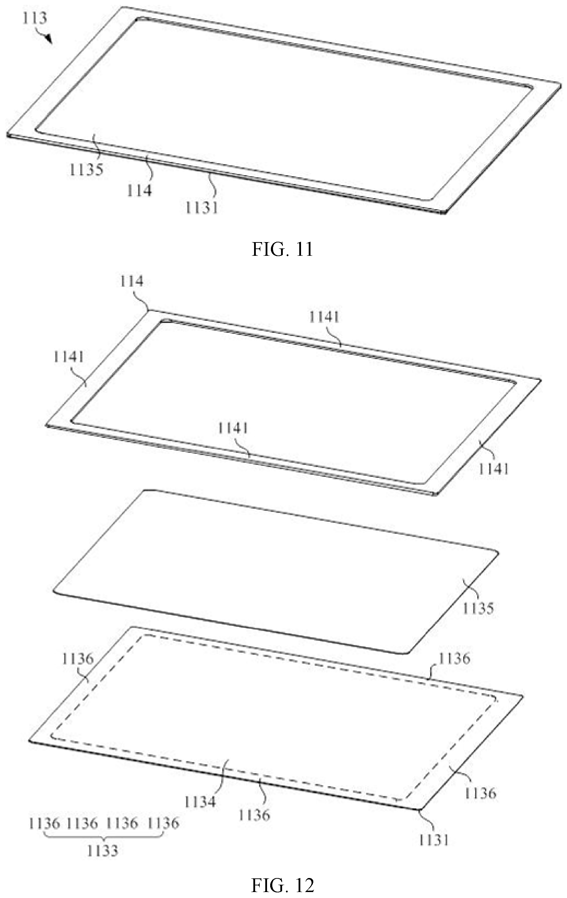

FIG. 11 is a schematic diagram of a structure of a box cover assembly provided in an embodiment of the present application. FIG. 12 is an exploded view of a structure of a box cover assembly provided in an embodiment of the present application. As shown in FIG. 9 to FIG. 12, the plate face 1132, on a side facing the accommodating cavity 1111a of the box body 1110, of the cover plate 1131 includes a sealing area 1133. In a case that the cover plate 1131 of the battery box 110 is connected to the box body 1110, the sealing area 1133 of the cover plate 1131 forms a sealing fit with the box body 1110 to improve the sealing performance of the accommodating cavity 1111a in the battery box 110. A sealing member 114 is arranged between the sealing area 1133 of the plate face 1132 of the cover plate 1131 and the box body of the battery box 110 to seal a gap between the cover plate 1131 and the box body of the battery box 110.

Specifically, as shown in FIG. 8, the box body 1110 of the battery box 110 includes a bottom plate 1113 and multiple side plates 1114 connected to peripheral edges of the bottom plate 1113. The multiple side plates 1114 are sequentially connected to each other along a peripheral direction of the bottom plate 1113, and the bottom plate 1113 and the multiple side plates 1114 enclose to form an accommodating cavity 1111a. The mounting opening 1112a is located at an end, far away from the bottom plate 1113, of the multiple side plates 1114. The bottom plate 1113 is a rectangular plate, and the number of the side plates 1114 is four, and the side plates are distributed around the bottom plate 1113. A connecting flange 1115 is arranged on a side, facing away from the accommodating cavity 1111a, of each of the side plates 1114. Multiple connecting flanges 1115 are sequentially connected to each other to form an annular structure. The connecting flanges 1115 are plate-shaped and arranged corresponding to the sealing area 1133 of the plate face 1132 of the cover plate 1131.

The sealing area 1133 of the plate face 1132 of the cover plate 1131 is of an annular structure extending along a peripheral direction of the cover plate 1131, so as to make the sealing area 1133 of the plate face 1132 corresponding to the connecting flanges 1115 connected to form an annular structure. The sealing area 1133 includes multiple sealing sections 1136 sequentially connected along the cover plate 1131. The number of the multiple sealing sections 1136 is equal to the number of the multiple connecting flanges 1115, and one of the sealing sections is corresponding to one of the connecting flanges.

The sealing member 114 is arranged between the annular sealing area 1133 and the connecting flanges 1115 connected to form the annular structure. A side of the sealing member 114 is abutted against the sealing area 1133, and another side of the sealing member 114 is abutted against the connecting flanges 1115 to seal a gap between the sealing area 1133 and the connecting flanges 1115. The sealing member 114 is of an annular structure extending along the sealing area 1133. The sealing member 114 includes multiple sealing portions 1141 connected to each other in sequence along the sealing area 1133. The number of the multiple sealing portions 1141 is equal to the number of the multiple sealing sections 1136, and one of the sealing portions is corresponding to one of the sealing sections.

It should be noted that the sealing member 114 is first arranged in the sealing area 1133 of the plate face 1132 of the cover plate 1131. When the cover plate 1131 is connected to the box body 1110, a side, facing away from the cover plate 1131, of the sealing member 114 is abutted against a side, facing the cover plate 1131, of the connecting flanges 1115 to achieve sealing between the cover plate 1131 and the box body 1110. Alternatively, the sealing member 114 is first arranged on the side, facing the cover plate 1131, of the connecting flanges 1115. When the cover plate 1131 is connected to the box body 1110, a side, facing away from the connecting flanges 1115, of the sealing member 114 is abutted against the sealing area 1133 of the plate face 1132 of the cover plate 1131.

In some embodiments, the plate face 1132, on a side facing the accommodating cavity 1111a of the box body 1110, of the cover plate 1131 includes a separation area 1134, and the separation layer 1135 is arranged in the separation area 1134. The sealing area 1133 of the plate face 1132 of the cover plate 1131 is located at a periphery of the separation area 1134. As such, the situation where the separation layer 1135 is arranged in the sealing area 1133 of the plate face 1132 of the cover plate 1131, thereby affecting the sealing effect between the sealing area 1133 of the plate face 1132 and the box body 1110, is avoided.

The sealing area 1133 is of an annular structure extending along a peripheral direction of the separation area 1134, to prevent the separation layer 1135 from affecting the sealing effect between a periphery of the cover plate 1131 and the box body 1110.

In some embodiments, the sealing area 1133 is arranged adjacent to the separation area 1134, so as to make the sealing area 1133 and the separation area 1134 as close to each other as possible, thereby making the separation layer 1135 and the sealing member 114 as close to each other as possible, reducing a width of a gap between the sealing member 114 and the separation layer 1135, and reducing an area of the foam adhesive 112 directly bonded to the plate face 1132 of the cover plate 1131 through a gap between the separation layer 1135 and the sealing member 114, thereby reducing the bonding strength between the cover plate 1131 and the foam adhesive 112 as much as possible.

An orthographic projection of the separation layer 1135 on the plate face 1132 is configured to be overlapped with the separation area 1134, and an orthographic projection of the sealing member 114 on the plate face 1132 is configured to be overlapped with the sealing area 1133, so as to make the separation layer 1135 and the sealing member 114 as close to each other as possible. Specifically, the cover plate 1131 is a rectangular plate. The plate face 1132, on a side facing the accommodating cavity 1111a of the box body 1110, of the cover plate 1131 is a rectangular surface. The separation area 1134 is a rectangular area. The separation layer 1135 is also rectangular in shape and overlapped with the separation area 1134. The sealing area 1133 is adjacent to a periphery of the separation area 1134, and the sealing area 1133 is of an annular structure extending along a peripheral direction of the separation area 1134. The sealing member 114 is also of an annular structure extending along a peripheral direction of the separation layer 1135, and the sealing member 114 is overlapped with the sealing area 1133.

Embodiments of the present application further provide a battery pack, and the battery pack includes a battery box. A specific structure of the battery box refers to the above embodiments. Since the battery pack adopts all the technical solutions of all the above embodiments, the battery pack achieves at least all the beneficial effects brought by the technical solutions of the above embodiments, which are not repeated here.

The battery pack 1 includes a battery box 110, a battery module, and a foam adhesive 112. A structure of the battery box 110 refers to the above embodiments. The battery module is arranged in the accommodating cavity 1111a of the battery box 110. The foam adhesive 112 is filled among the battery module, the box cover assembly 113 and the box body 1110 of the battery box 110.

In the battery pack 1 provided in the embodiments of the present application, the separation layer 1135 is arranged on a side face 1114, facing the accommodating cavity 1110 of the box body 1110, of the box cover of the battery box 110 to separate at least a portion of the plate face 1132 from the foam adhesive 112 in the accommodating cavity 1110, so that a bonding strength between the cover plate 1131 and the foam adhesive 112 is reduced. When the cover plate 1131 is disassembled from the box body 1110, the separation layer 1135 is retained on the foam adhesive 112, or the separation layer 1135 is separated from the foam adhesive 112, or the separation layer 1135 is torn off, with a portion of the separation layer 1135 remaining on the foam adhesive 112 and another portion of the separation layer remaining on the plate face 1132 of the cover plate 1131, so as to facilitate the disassembly of the cover plate 1131. In addition, the foam adhesive 112 and other parts are not easily damaged during the disassembly of the cover plate 1131, which is beneficial to reducing the maintenance cost of the battery pack 1.

In related technologies, to reduce a height of the battery pack, the battery cells of the battery module are horizontally arranged, although a length direction of the cylindrical battery cells of the battery module is perpendicular to a height direction of the battery module, two ends of the battery cells are supported through two brackets, and the brackets are fixedly connected to the battery box. However, the fixing of the brackets of the battery module to the battery box is complicated, which affects an assembly efficiency of the battery pack.

To this end, embodiments of the present application further provide a battery module.

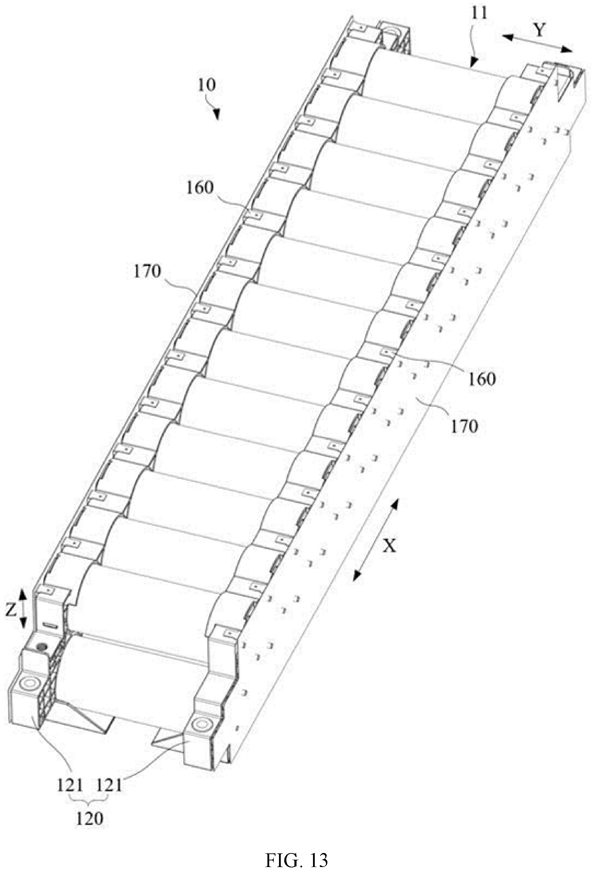

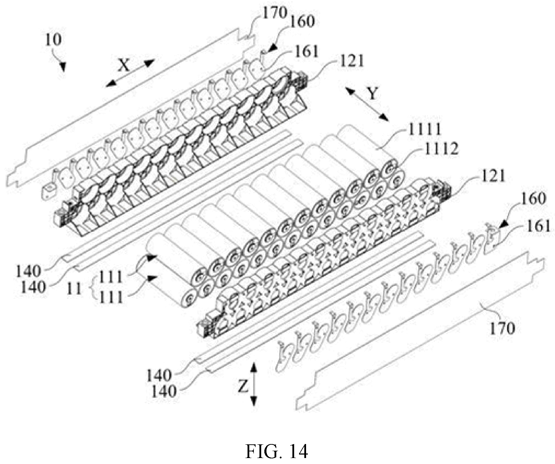

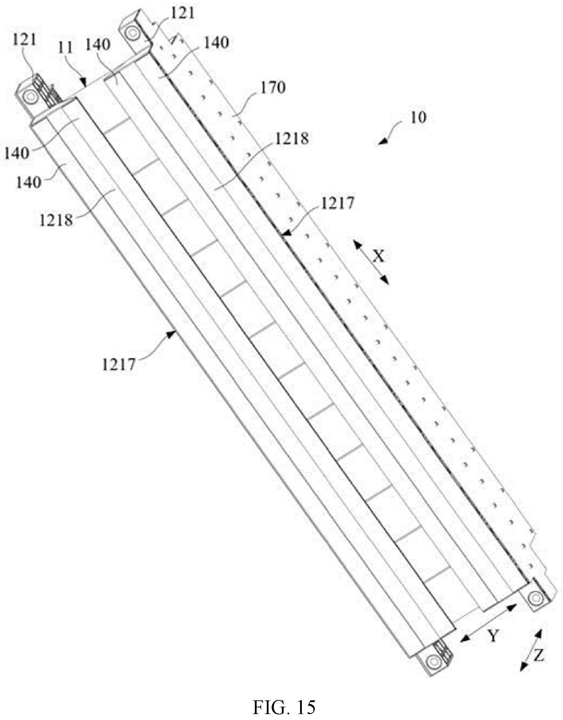

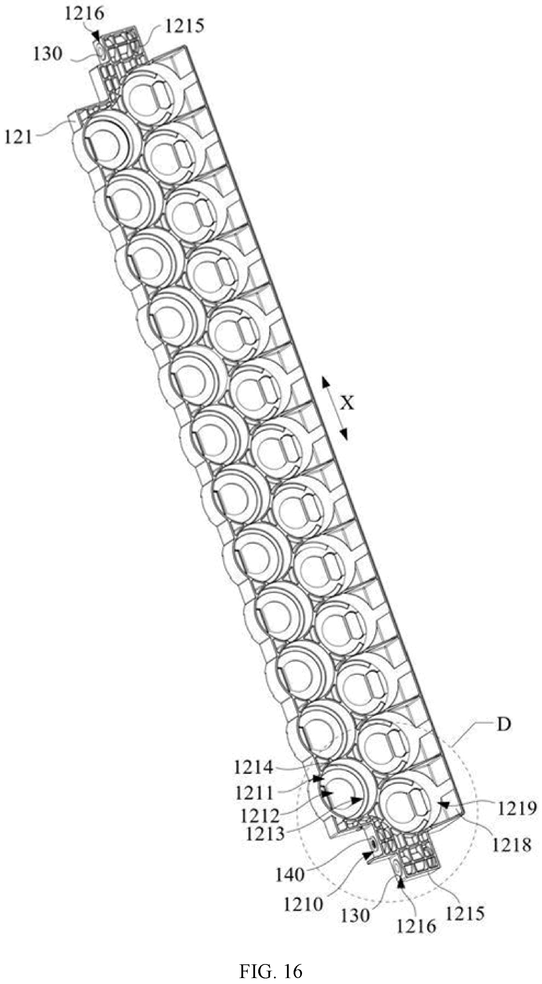

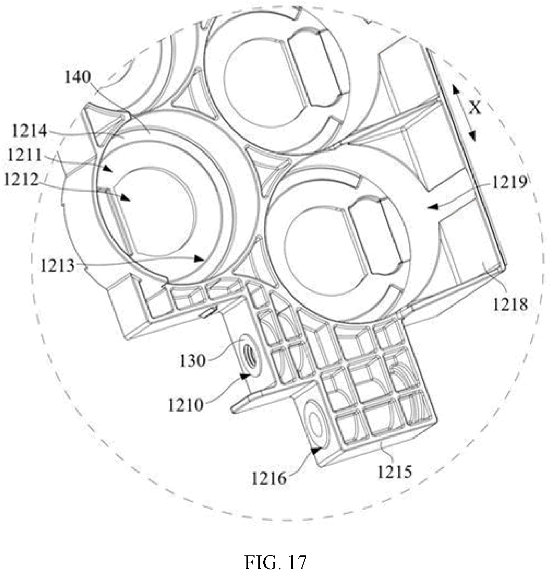

FIG. 13 is a schematic diagram of a structure of a battery module provided in an embodiment of the present application. FIG. 14 is an exploded view of a structure of a battery module provided in an embodiment of the present application. FIG. 15 is a view from another perspective of a structure of a battery module provided in an embodiment of the present application. FIG. 16 is a schematic diagram of a structure of a bracket provided in an embodiment of the present application. FIG. 17 is an enlarged view of a part D in FIG. 16.

As shown in FIG. 13 and FIG. 14, the battery module 10 includes a battery assembly 11 and a support assembly 120. The battery assembly 11 includes at least one battery 111. The battery 111 includes multiple battery cells 1111 arranged along a fourth direction X, each of the battery cells 1111 extends along a fifth direction Y, and the fourth direction X forms an included angle with the fifth direction Y. The support assembly 120 includes two brackets 121 arranged opposite to each other, and two ends of each of the battery cells 1111 are supported by the two brackets 121.

The multiple battery cells 1111 of the battery module 10 are configured to extend along the fifth direction Y, that is, the multiple battery cells 1111 of the battery module 10 are arranged horizontally, so that a length direction of the battery cells 1111 forms an included angle with a height direction Z of the battery module 10, which is beneficial for reducing an overall height of the battery module 10.

It should be noted that the included angle formed between the fourth direction X and the fifth direction Y is a right angle or an acute angle. The included angles formed between the fourth direction X and the height direction Z, as well as between the fifth direction Y with the height direction Z are right angles or acute angles.

Positioning grooves 1211 are formed on a side, facing the battery cells 1111, of the brackets 121, and an end, close to a corresponding bracket 121, of the battery cells 1111 is inserted into the positioning grooves 1211, so that the end, close to the corresponding bracket 121, of the battery cells 1111 is supported through the corresponding bracket 121.

As shown in FIG. 14, FIG. 16, and FIG. 17, avoidance holes 1212 are formed on bottom faces of the positioning grooves 1211, and the avoidance holes 1212 pass through the brackets 121 along the fifth direction Y. The avoidance holes 1212 are configured to avoid electrodes 1112, at the end close to the corresponding bracket 121, of the battery cells 1111. When the battery cells 1111 are supported through the corresponding bracket 121 at the end close to the corresponding bracket 121, the electrodes 1112 of the battery cells 1111 are exposed through the avoidance holes 1212.

Connecting adhesives 1214 are further arranged on the bottom faces of the positioning grooves 1211. When the end, close to the corresponding bracket 121, of the battery cells 1111 has inserted into the positioning grooves 1211, the connecting adhesives 1214 are bonded to an end face of the end, inserted into the positioning grooves 1211, of the battery cells 1111, so as to make a connection between the battery cells 1111 and the brackets 121 stable. Adhesive containing grooves 1213 are formed on the bottom faces of the positioning grooves 1211. The adhesive containing grooves 1213 extend along a peripheral direction of the avoidance holes 1212, and the connecting adhesives 1214 are at least partially accommodated in the adhesive containing grooves 1213. The connecting adhesives 1214 are formed through the curing of the adhesive applied into the adhesive containing grooves 1213, or the connecting adhesives are adhesive tapes.

Continuing to refer to FIG. 14, a busbar 160 is further arranged on a side, facing away from the battery cells 1111, of each of the brackets 121. The busbars 160 are connected to the electrodes 1112 of the battery cells 1111 through the avoidance holes 1212, so as to connect the multiple battery cells 1111 in series or in parallel. Insulating sheets 170 are further arranged on the side, facing away from the brackets 121, of the busbars 160. The insulating sheets 170 cover the busbars 160 to improve the insulation performance between adjacent battery modules 10 and reduce the risk of thermal runaway.

Specifically, the battery assembly 11 includes multiple batteries 111, the multiple batteries 111 are arranged along the height direction Z of the battery module 10, and the battery cells 1111 of two adjacent batteries 111 are distributed in a staggered manner. A cooling pipe is arranged between two adjacent batteries 111. The cooling pipe is configured to cool and dissipate heat from the multiple battery cells 1111 of the batteries 111, so as to improve the operation stability of the battery cells 1111.

One of the busbars 160 includes multiple connecting members 161, and the multiple connecting members 161 are arranged along the fourth direction X. Each of the multiple connecting members 161 is connected to the electrode 1112 of at least one of the battery cells 1111. The multiple connecting members 161 are connected in parallel or in series to connect the multiple battery cells 1111 in parallel or in series.

In the battery module 10 provided in the embodiments of the present application, the two ends of one of the battery cells 1111 are supported through two brackets 121, and the foam adhesive is not needed to fix the battery cells 1111, which is beneficial for reducing the cost and weight of the battery module 10, and makes the disassembly of the battery module 10 convenient, thereby enhancing the maintenance convenience of the battery module 10.

In some embodiments, as shown in FIG. 14, FIG. 16, and FIG. 17, a first fixing hole 1216 is formed at an end of at least one of the brackets 121 along the fourth direction X, and a fixing sleeve 130 is embedded in the first fixing hole 1216. The fixing sleeve 130 is configured to be sleeved on a fastener (not shown in the drawings) and fixedly connected to the fastener.

In the embodiments of the present application, first fixing holes 1216 are formed at two ends of at least one of the brackets 121 along the fourth direction X, and fixing sleeves 130 are embedded in the first fixing holes 1216. When the battery module 10 is connected to the battery box, fasteners are inserted into the fixing sleeves 130, so that the fixing sleeves 130 are sleeved on the fasteners and fixedly connected to the fasteners, and the fastener are connected to the battery box, so that the brackets 121 are quickly fixed to the battery box, and it is convenient to operate.

Meanwhile, the situation where the fasteners are directly connected to the brackets 121, causing excessively large fastening force applied to the brackets 121 by the fasteners, resulting in deformation of the brackets 12, or even failure of the fasteners to fasten the brackets 121, is avoided, which is conducive to improving the mounting stability of the battery module 10.

In some embodiments, fixing portions 1215 are arranged to protrude from two ends of the brackets 121 along the fourth direction X, and the first fixing holes 1216 pass through the fixing portions 1215. As such, an impact on a strength of a structure configured to support the battery cells 1111 of the brackets 121 caused by the formation of the first fixing holes 1216 on the brackets 121 is reduced, which is conducive to improving the stability of the brackets 121 in supporting the battery cells 1111.

The first fixing holes 1216 pass through the fixing portions 1215 along the height direction Z of the battery module 10, and the fourth direction X and the fifth direction Y each form an included angle with the height direction Z of the battery module 10. When the brackets 121 are fixed to the battery box, the battery module 10 is placed on a bottom face of the accommodating cavity of the battery box, the fasteners pass through the fixing sleeves 130 from above the fixing portions 1215 and are inserted into a portion located below the fixing portions 1215 of the battery box, so as to fix the brackets 121 to the battery box, and it is convenient to operate.

Specifically, fixing portions 1215 extend from two ends of the brackets 121 along the fourth direction X. A gap is formed between a bottom of the fixing portions 1215 and a bottom of the brackets 121, and a gap is formed between a top of the fixing portions 1215 and a top of the brackets 121. The fixing sleeves 130 are nuts. The fixing sleeves 130 are made of metal or other materials with high strength. A length of one of the fixing sleeves 130 is substantially equal to a depth of one of the first fixing holes 1216. The fasteners are bolts, screws, or the like, which is not limited herein.

In other embodiments, the first fixing holes 1216 also pass through the fixing portions 1215 along the fourth direction X or the fifth direction Y, which depends on structures of the battery box and the fixing portions 1215, as long as the fasteners are able to be inserted into the fixing sleeves 130 and connected to the battery box.

In some embodiments, first fixing holes 1216 are arranged at two ends of each of the two brackets 121 along the fourth direction X, so as to facilitate the fixation of the two brackets 121 to the battery box, and further improve the assembly efficiency of the battery module 10 and the battery box.

In some embodiments, as shown in FIG. 14 and FIG. 15, an adhesive member 140 is arranged on a bottom face of at least one of the brackets 121. When the battery module 10 is mounted in the accommodating cavity of the battery box, the adhesive members 140 arranged on the bottom faces of the brackets 121 are bonded to the bottom face of the accommodating cavity of the battery box, so as to further increase the connection strength between the brackets 121 and the battery box, and it is convenient to operate.

Specifically, adhesive grooves 1217 are formed on the bottom faces of the brackets 121, and the adhesive members 140 are at least partially accommodated in the adhesive grooves 1217, so as to keep a position of the adhesive members 140 relative to the brackets 121 fixed, which is conducive to enhancing the bonding stability between the bottom face of the brackets 121 and the bottom face of the accommodating cavity of the battery box. Furthermore, the adhesive grooves 1217 are formed on the bottom face of the brackets 121, during the process of connecting the battery module 10 to the battery box, adhesive is applied to the adhesive grooves 1217 on the bottom face of the brackets 121, and the bottom face of the brackets 121 is attached to the bottom face of the accommodating cavity of the battery box. Once the adhesive has cured, the bottom face of the brackets 121 and the bottom face of the accommodating cavity are bonded together.

In some embodiments, the adhesive members 140 are directly arranged in the adhesive grooves 1217, a side surface of the adhesive members 140 is bonded to a bottom face of the adhesive grooves 1217, and another side surface of the adhesive members 140 is bonded to the bottom face of the accommodating cavity. The adhesive members 140 are double-sided tapes or other adhesive members, which is not limited herein.

In some embodiments, the adhesive members 140 are configured to extend along the fourth direction X to increase a length of the adhesive members 140, thereby increasing the bonding strength between the brackets 121 and the bottom face of the accommodating cavity of the battery box.

Specifically, the bottom face of the brackets 121 is a flat surface. The length of one of the adhesive members 140 on the bottom face of the brackets 121 along the fourth direction X is substantially equal to a length of one of the brackets 121 along the fourth direction X, so as to maximize the length of the adhesive members 140 on the bottom face of the brackets 121.

In other embodiments, multiple adhesive members 140 are arranged on the bottom face of the brackets 121, and the multiple adhesive members 140 are arranged at intervals along the fourth direction X. When the battery module 10 is mounted in the accommodating cavity of the battery box, the multiple adhesive members 140 located on the bottom face of the brackets 121 are each bonded to the bottom face of the accommodating cavity, so as to increase the bonding strength between the brackets 121 and the bottom face of the accommodating cavity of the battery box.

As shown in FIG. 15 to FIG. 17, accommodating portions 1218 are arranged to protrude from a side, facing the battery cells 1111, of the brackets 121. The accommodating portions 1218 are located at bottoms of the battery cells 1111, and the accommodating portions 1218 include first accommodating grooves 1219 configured to accommodate a portion of the battery cells 1111. As such, the accommodating portions 1218 are configured to support and position the battery cells 1111 at the bottom of the battery cells 1111, which is conducive to enhancing the connection stability between the battery cells 1111 and the brackets 121.

In some embodiments, the adhesive members 140 are arranged on a side surface, facing away from the battery cells 1111, of the accommodating portions 1218. When the battery module 10 is mounted in the accommodating cavity of the battery box, the adhesive members 140 arranged on the side surface, facing away from the battery cells 1111, of the accommodating portions 1218 are bonded to the bottom face of the accommodating cavity of the battery box, so as to further increase the connection strength between the support assembly 120 and the battery box, and it is convenient to operate.

The accommodating portions 1218 are arranged to protrude from a side, facing the battery cells 1111, of the two brackets 121, and the adhesive members 140 are arranged on a side, facing away from the battery cells 1111, of the two accommodating portions 1218. Furthermore, the adhesive members 140 are configured to extend along the fourth direction X so as to increase the length of the adhesive members 140, thereby enhancing the bonding stability between the accommodating portions 1218 and the bottom face of the accommodating cavity.

Specifically, a side surface, facing away from the battery cells 1111, of the accommodating portions 1218 is a flat surface. The length of one of the adhesive members 140 arranged on the side surface, facing away from the battery cells 1111, of the accommodating portions 1218 along the fourth direction X is substantially equal to the length of one of the accommodating portions 1218 along the fourth direction X, so as to maximize the length of the adhesive members 140.

In other embodiments, multiple adhesive members 140 are arranged on the side surface, facing away from the battery cells 1111, of the accommodating portions 1218, and the multiple adhesive members 140 are arranged at intervals along the fourth direction X. When the battery module 10 is mounted in the accommodating cavity of the battery box, the multiple adhesive members 140 arranged on the side surface, facing away from the battery cells 1111, of the accommodating portions 1218 are each bonded to the bottom face of the accommodating cavity, so as to increase the connection strength between the accommodating portions 1218 and the bottom face of the accommodating cavity of the battery box.

As shown in FIG. 16 and FIG. 17, a connecting hole 1210 is further formed in at least one end of the brackets 121 along the fourth direction X. A conductive member 150 is arranged within the connecting hole 1210, and the conductive member 150 is electrically connected to the battery cells 1111. As such, conductive members 150 of two adjacent battery modules 10 are electrically connected to each other, so that the two adjacent battery modules 10 are conveniently electrically connected.

Connecting holes 1210 are formed in at least one end of the two brackets 121 along the fourth direction X, and a conductive member 150 is arranged within each of the connecting holes 1210, so that two electrodes of each of the battery cells 1111 are electrically connected to conductive members 150 of the two brackets 121.

In addition, the busbars 160 are connected to the conductive members 150, so that the conductive members 150 are electrically connected to the battery cells 1111. Specifically, the conductive members 150 are conductive nuts, and the busbars 160 are fixed to the conductive nuts by bolts, so that the busbars 160 are electrically connected to the conductive nuts, and it is convenient to operate.

Embodiments of the present application further provide a battery pack, and the battery pack includes a battery module. A specific structure of the battery module refers to the above embodiments. Since the battery pack adopts all the technical solutions of all the above embodiments, the battery pack achieves at least all the beneficial effects brought by the technical solutions of the above embodiments, which are not repeated here.

The battery pack includes a battery box and a battery module 10. The battery box includes an accommodating cavity. A structure of the battery module 10 refers to the above embodiments, and the battery module 10 is mounted in the accommodating cavity. The battery pack further includes fasteners, and the fasteners are inserted into the fixing sleeves 130 of the battery module 10, so that the fixing sleeves 130 are sleeved on the fasteners, and the fasteners are connected to the battery box, so that the battery module 10 is connected to the battery box.

In the battery pack provided in the embodiments of the present application, first fixing holes 1216 are formed at two ends of at least one of the brackets 121 of the battery module 10 along the fourth direction X, and fixing sleeves 130 are embedded in the first fixing holes 1216. When the battery module 10 is connected to the battery box, the fasteners are inserted into the fixing sleeves 130, so that the fixing sleeves 130 are sleeved on the fasteners and fixedly connected to the fasteners, and the fasteners are connected to the battery box, so that the brackets 121 are quickly fixed to the battery box, and it is convenient to operate.

Meanwhile, the situation where the fasteners are directly connected to the brackets 121, causing excessively large fastening force applied to the brackets 121 by the fasteners, resulting in deformation of the brackets 121, or even failure of the fasteners to fasten the brackets 121, is avoided, which is conducive to improving the mounting stability of the battery module 10.

## Claims

1. A protective plate, comprising a first protective layer, a reinforcement layer, a buffer layer, and a second protective layer stacked along a first direction; and the reinforcement layer and the plurality of buffer layer being stacked between the first protective layer and the second protective layer;
wherein the buffer layer comprises a plurality of first buffer grooves and a plurality of second buffer grooves; the plurality of first buffer grooves and the second buffer grooves are arranged on two opposite sides of the buffer layer; and the plurality of first buffer grooves and the plurality of second buffer grooves are distributed in a staggered manner.

2. The protective plate of claim 1, wherein the plurality of first buffer grooves and the plurality of second buffer grooves are alternately distributed along a second direction; and the second direction forms an included angle with the first direction.

3. The protective plate of claim 2, wherein the first buffer grooves and the second buffer grooves each extend along a third direction; and the first direction, the second direction and the third direction form an included angle with each other.

4. The protective plate of claim 3, wherein in the second direction, a width of the first buffer grooves is configured to be greater than a width of the second buffer grooves.

5. The protective plate of claim 1, wherein the buffer layer is located between the reinforcement layer and the second protective layer; and the second buffer grooves are located on a side, facing the second protective layer, of the buffer layer; and
wherein a buffer protrusion is further arranged on a side, facing the buffer layer, of the second protective layer, and the buffer protrusion fills at least a part of the second buffer grooves.

6. The protective plate of claim 1, wherein the buffer layer comprises connecting portions located at bottoms of the second buffer grooves; the protective plate further comprises second fixing holes; and the second fixing holes pass through the first protective layer, the reinforcement layer, the connecting portions of the buffer layer, and the second protective layer along the first direction.

7. The protective plate of claim 6, wherein second accommodating grooves are formed on a side, facing away from the buffer layer, of the second protective layer, and openings of the second fixing holes are formed at bottoms of the second accommodating grooves.

8. The protective plate of any one of claims 1 to 7, wherein a thickness of the buffer layer is greater than or equal to 2 mm and less than or equal to 5 mm; and/or
a thickness of a wall of the first buffer grooves is greater than or equal to 0.6 mm and less than or equal to 1 mm; and/or
a thickness of a wall of the second buffer grooves is greater than or equal to 0.6 mm and less than or equal to 1 mm.

9. The protective plate of any one of claims 1 to 7, wherein a thickness of the first protective layer is greater than or equal to 0.6 mm and less than or equal to 1 mm; and/or
a thickness of the second protective layer is greater than or equal to 0.6 mm and less than or equal to 1 mm; and/or
a thickness of the reinforcement layer is greater than or equal to 0.8 mm and less than or equal to 1.2 mm.

10. The protective plate of any one of claims 1 to 7, wherein a plurality of buffer members are arranged on a side, facing away from the reinforcement layer, of the first protective layer.

11. The protective plate of claim 10, wherein the buffer layer comprises connecting portions located at bottoms of the second buffer grooves; and the buffer members are positioned corresponding to the connecting portions.

12. The protective plate of claim 11, wherein the plurality of buffer members are divided into a plurality of buffer groups; each of the buffer groups is arranged corresponding to a respective one of the connecting portions; and the plurality of buffer members in the buffer groups are arranged at intervals along an extension direction of the connecting portions.

13. The protective plate of any one of claims 1 to 12, wherein a material of the first protective layer includes resin and/or fiberglass; and/or
a material of the reinforcement layer includes a metal; and/or
a material of the buffer layer includes a metal; and/or
a material of the second protective layer includes resin and/or fiberglass.

14. A battery box, comprising:
a box body, the box body comprising an accommodating cavity; the accommodating cavity being configured to accommodate a battery module; and
a protective plate, connected to the box body, the protective plate being the protective plate of any one of claims 1 to 13; and a side, facing away from the reinforcement layer, of the first protective layer of the protective plate facing the box body.

15. The battery box of claim 14, wherein a mounting opening in communication with the accommodating cavity is formed on a side of the box body; the battery box further comprises a box cover assembly; the box cover assembly comprises a cover plate and a separation layer; the cover plate is connected to the box body and covers the mounting opening; the separation layer is arranged on a plate face, facing the accommodating cavity, of the cover plate; and the separation layer is configured to separate at least a portion of the plate face from a foam adhesive in the accommodating cavity.

16. The battery box of claim 15, wherein the plate face comprises a separation area and a sealing area; the separation layer is arranged in the separation area; the sealing area is located at a periphery of the separation area; and a sealing member is arranged between the sealing area and the box body of the battery box.

17. The battery box of claim 16, wherein the sealing area is of an annular structure extending along a peripheral direction of the separation area.

18. The battery box of claim 16, wherein the sealing area is adjacent to the separation area; an orthographic projection of the separation layer on the plate face is configured to be overlapped with the separation area; and an orthographic projection of the sealing member on the plate face is configured to be overlapped with the sealing area.

19. The battery box of claim 15, wherein the separation layer is bonded to the plate face.

20. The battery box of claim 19, wherein a bonding strength between the separation layer and the plate face is configured to be smaller than a bonding strength between the separation layer and the foam adhesive; and/or
the bonding strength between the separation layer and the plate face is configured to be greater than the bonding strength between the separation layer and the foam adhesive.

21. The battery box of any one of claims 15 to 20, wherein the separation layer is a tearable film.

22. The battery box of any one of claims 15 to 20, wherein a material of the separation layer includes one or more of polyethylene terephthalate (PET), polyvinyl chloride (PVC), and thermoplastic polyurethane (TPU).

23. The battery box of any one of claims 15 to 20, wherein a thickness of the separation layer is greater than or equal to 0.2 mm and less than or equal to 0.5 mm.

24. A battery module, configured to be arranged in the accommodating cavity of the battery box of any one of claims 14 to 23, the battery module comprising:
a battery assembly comprising at least one battery, the battery comprising a plurality of battery cell arranged along a fourth direction; each of the battery cells extending along a fifth direction; and the fourth direction forming an included angle with the fifth direction; and
a support assembly comprising two brackets arranged opposite to each other; and two ends of each of the battery cells being supported through the two brackets;
wherein first fixing holes are formed at two ends of at least one of the brackets along the fourth direction; fixing sleeves are embedded in the first fixing holes; and the fixing sleeves are configured to be sleeved on fasteners and fixedly connected to the fasteners.

25. The battery module of claim 24, wherein fixing portions are arranged to protrude from two ends of the brackets along the fourth direction; and the first fixing holes pass through the fixing portions.

26. The battery module of claim 25, wherein the first fixing holes pass through the fixing portions along a height direction of the battery module; and the fourth direction forms an included angle with the height direction of the battery module, and the fifth direction forms an included angle with the height direction of the battery module.

27. The battery module of claim 24, wherein the first fixing holes are arranged at two ends of the two brackets along the fourth direction.

28. The battery module of any one of claims 24 to 27, wherein an adhesive member is arranged on a bottom face of at least one of the brackets.

29. The battery module of claim 28, wherein adhesive grooves are formed on bottom faces of the brackets, and the adhesive members are at least partially accommodated in the adhesive grooves.

30. The battery module of claim 28, wherein the adhesive member extends along the fourth direction.

31. The battery module of claim 28, wherein accommodating portions are arranged to protrude from a side, facing the battery cells, of the brackets; the accommodating portions are located at bottoms of the battery cells; and the accommodating portions comprise first accommodating grooves configured to accommodate a portion of the battery cells.

32. The battery module of any one of claims 24 to 27, wherein a connecting hole is further formed in at least one end of the brackets along the fourth direction; a conductive member is arranged within the connecting hole; and the conductive member is electrically connected to the battery cells.

33. A battery pack, comprising:
a battery box comprising an accommodating cavity; and
a battery module, the battery module being the battery module of any one of claims 24 to 32; and the battery module being mounted in the accommodating cavity.

34. The battery pack of claim 33, wherein the battery pack further comprises:
a foam adhesive filled among the battery module, the cover plate, and the box body of the battery box.
